# EUROPEAN PATENT APPLICATION

(11) **EP 3 089 054 A1**
(43) Date of publication of application: **02.11.2016**
(21) Application number: 16153241.1
(22) Date of filing: 28.01.2016
(51) Int. Cl.: G06F 17/30

(54) **DATA CONSTRAINTS FOR POLYGLOT DATA TIERS**

(30) Priority: 29.04.2015 GB 201507301
(71) Applicant: FUJITSU LIMITED, Kawasaki-shi, Kanagawa 211-8588 (JP)
(72) Inventor: COSTABELLO, Luca, Galway (IE); UMBRICH, Jürgen, 1020 Vienna (AT); MENDAY, Roger, Guildford, Surrey GU1 1YB (GB); VANDENBUSSCHE, Pierre-Yves, Galway (IE)
(74) Representative: Stebbing, Timothy Charles

(57) **Abstract**

A Data Constraint Engine (100) for enforcing data constraints in a polyglot data tier (20) having a plurality of database-specific data stores (21, 22, 23) of various types such as an RDBMS (21), a Triplestore (22), and a MongoDB (23). The Data Constraint Engine uses the concept of a unified data model based on "records" in order to allow data constraints to be defined (using so-called "record shapes") in a store-agnostic way. The Data Constraint Engine includes APIs (130) for processing incoming requests from remote clients (30) relating to data in the polyglot data tier, for example a request to create or update data in a data store. The APIs extract, from such a request, a record corresponding to the data specified in the request and a data source identifier identifying the data store holding the specified data. Then, on the basis of the record extracted by the interface, an appropriate record shape is extracted from a shapes catalogue (110), the record shape determining the structure of the record. Validators (120) each validate the record against the record shape according to various criteria such as format, data type, cardinality and slot count. If the record is validated, a record dispatcher (140) directs the specified data to the appropriate data store using the data source identifier. Data read from a data store can be validated in the same way.

## Description

### Field of the Invention

The present invention is in the field of data storage. In particular, embodiments of the present invention relate to mechanism for modelling and enforcing data constraints in data tiers with multiple heterogeneous databases (so-called "polyglot data tiers").

### Background of the Invention

The concept of "data tiers" is widely used in software engineering. A multi-tier architecture is a client-server architecture in which presentation, application processing, and data management functions are physically separated. Whilst an n-tier architecture can be considered in general, the commonest architecture is the three-tier architecture. A three-tier architecture is typically composed of a presentation tier, a logic or processing tier, and a data storage tier.

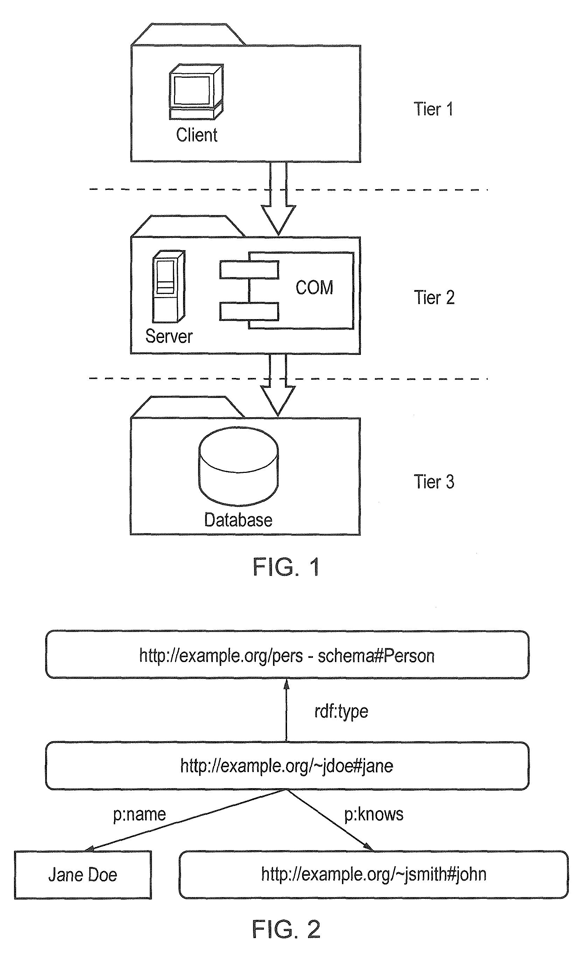

Figure 1 shows such a three-tier architecture in simplified form. Although it may be helpful to regard the respective tiers as being implemented on different hardware (as indicated in Figure 1), this is not essential.

In this example, Tier 1 is a topmost, Client tier including the user interface of an application, which may run on a desktop PC or workstation indicated by Client in Figure 1, and which may use a standard graphical user interface. This tier supplies data (such as queries) to the Middle Tier, Tier 2 (also referred to as the Logic tier) which contains, functional process logic that may consist of one or more separate modules running on a workstation or application server (denoted by Server in Figure 1), in order to provide the functionality of the application. Tier 3 is a Data tier which receives queries from the higher tiers and may be implemented on a database server or mainframe that contains the computer data storage logic, schematically indicated by Database in Figure 1. This tier includes the data sets referred to by the application, and database management system software that manages and provides access to the data. APIs (Application Program Interfaces) may exist between respective tiers, each API being a specification by which the software in different tiers interact with each other. Thus, a request or data operation originating from Tier 1 would be given an API wrapper that converts the request to the format of queries understandable to the Tier 3 databases.

In practice, the multi-tier architecture may involve the use of multiple systems or nodes at each level. In this way, each tier of the architecture may be provided in distributed form (in principle, elements of each tier may be located anywhere on the Internet for example), and although the nodes are illustrated as identical hardware systems, more generally each tier may be heterogeneous both at hardware and software levels. Such a multiple-system implementation gives rise to the possibility of so-called "polyglot" tiers in which the respective nodes or systems employ heterogeneous standards or technologies. For example the client tier might employ HTML, CSS and Java Script to provide a web-based interface, and a mobile platform like iOS or Android for a mobile interface. The Middle tier might employ Java, .NET, or one of the many other platforms available.

Of particular relevance to the present invention, there is the possibility of a polyglot data tier combining various database technologies to form a distributed database. The two main classes of database technology are:
(i) the traditional relational database (RDBMS) approach using SQL (Structured Query Language), which is a computer language for storing, manipulating and retrieving data stored in relational database. Examples of SQL-based languages include MySQL, Oracle or MS SQL.
(ii) a NoSQL (Not only SQL) database, which provides a mechanism for storage and retrieval of data that is structured by means other than the tabular relations used in relational databases. Examples of NoSQL databases include MongoDB and Cassandra.

As an aside, it is noted that relational databases store data in rows and columns to form tables that need to be defined before storing the data. The definition of the tables and the relationship between data contained on these tables is called a schema. A relational database uses a fixed schema.

Graph databases represent a significant extension over relational databases by storing data in the form of nodes and arcs, where a node represents an entity or instance, and an arc represents a relationship of some type between any two nodes. There are several types of graph representations. Graph data may be stored in memory as multidimensional arrays, or as symbols linked to other symbols. Another form of graph representation is the use of "tuples," which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3-tuple is called a triple, a four-tuple is called a quadruple, and so on.

The choice of database technology entails choosing a storage engine, data model, and query language. Relational databases support the relational data model, generally with SQL as query language. On the other hand, NoSQL databases each support a single data model, such as a document, graph, key-value, or column-oriented model, along with a specialized query language. For example, MongoDB uses a document data model and Cassandra a column-oriented model. Key-value stores allow the application developer to store schema-less data. This data usually consists of a string that represents the key, and the actual data that is considered the value in the "key-value" relationship.

Thus, a polyglot data tier is a set of autonomous data stores that adopt different data models (e.g. relational, document-based, graph-based, etc).

At this point, since reference will be made later to RDF, ontologies, RDFS, OWL, OSLC and QUDT, some brief explanation of these terms will be given.

The Resource Description Framework (RDF) is a family of World Wide Web Consortium (W3C) specifications used as a general method for conceptual description or modelling of information that is implemented in web resources. RDF is based upon the idea of making statements about resources (in particular web resources) in the form of subject-predicate-object expressions. These expressions are examples of the triples mentioned above. The subject denotes the resource, and the predicate denotes traits or aspects of the resource and expresses a relationship between the subject and the object.

RDF is a graph-based data model with labelled nodes and directed, labelled edges, providing a flexible model for representing data. The fundamental unit of RDF is the statement, which corresponds to an edge in the graph. An RDF statement has three components: a subject, a predicate, and an object. The subject is the source of the edge and must be a resource. In RDF, a resource can be anything that is uniquely identifiable via a Uniform Resource Identifier (URI). Typically, this identifier is a Uniform Resource Locator (URL) on the Internet, which is a special case of a URI. However, URIs are more general than URLs (there is no requirement that a URI can be used to locate a document on the Internet).

The object of a statement is the target of the edge. Like the subject, it can be a resource identified by a URI, but it can alternatively be a literal value like a string or a number. The predicate of a statement (also identified by a URI) determines what kind of relationship holds between the subject and the object. In other words, the predicate is a kind of property or relationship which asserts something about the subject by providing a link to the object.

Figure 2 shows an example RDF graph with three statements. One statement has subject http://example.org/∼jdoe#jane, predicate p:knows and object Jane Doe. In other words, this statement represents that "Jane knows John." The statement with predicate p:name is an example of a statement that has a literal value (i.e., "Jane Doe") as its object. This statement indicates that Jane's name is "Jane Doe." Here, p:knows and p:name are called qualified names. The third statement declares Jane to be a Person.

The above mentioned triples can be used to encode graph data, each triple representing a subject-predicate-object expression. Thus an RDF Graph can be represented as a set of RDF triples, and the RDF triples in turn can be written out (serialised) as a series of nested data structures. There are various ways of serialising RDF triples, for example using XML (Extensible Markup Language) or JSON (JavaScript Object Notation), giving rise to various file formats (serialisation formats).

As an example, the following XML code is a serialization of the RDF graph in Figure 2:

```
 <rdf:RDF
 xmlns:rdf="http://www.w3.org/1999/02/22-rdf-syntax-ns#"
 xmlns:p="http://example.org/pers-schema#">
 <rdf:Description rdf:about="http://example.org/∼jdoe#jane">
 <p:knows rdf:resource="http://example.org/∼jsmith#john" />
 <p:name>Jane Doe</p:name>
 <rdf:type
 rdf:resource="http://example.org/pers-schema#Person"/>
 </rdf:Description>
 </rdf:RDF>
```

The RDF mechanism for describing resources is a major component in the W3C's "Semantic Web" effort, in which a key concept is "linked data". Linked data essentially seeks to organise internet resources into a global database designed for use by machines, as well as humans, where links are provided between objects (or descriptions of objects) rather than between documents. Key parts of the W3C's Semantic Web technology stack for linked data include RDFS and OWL, in addition to the above mentioned RDF and URIs.

RDFS (RDF Schema) is a semantic extension of RDF and is written in RDF. It provides mechanisms for describing groups of related resources and the relationships between these resources, these resources being used to determine characteristics of other resources, such as the domains and ranges of properties. RDFS thus provides basic elements for the description of ontologies, otherwise called RDF vocabularies, intended to structure RDF resources (incidentally, although a distinction may be drawn between the terms "ontology" and "vocabulary", in this specification the terms are used interchangeably unless the context demands otherwise). Description about resources using RDF can be saved in a triplestore, and retrieved and manipulated using the RDF query language SPARQL. Both RDFS and SPARQL are part of the Semantic Web technology stack of the W3C.

The RDF Schema class and property system is similar to the type systems of object-oriented programming languages such as Java. However, RDF Schema differs from such systems in that instead of defining a class in terms of the properties its instances may have, RDF Schema describes properties in terms of the classes of resource to which they apply. The RDF Schema approach is "extensible" in the sense that it is easy for others to subsequently define additional properties without the need to re-define the original description of these classes.

Meanwhile, richer vocabulary/ontology languages such as OWL (Web Ontology Language) make it possible to capture additional information about structure and semantics of the data.

OSLC (Open Service for Lifecycle Collaboration) is another ontology which builds on RDF to enable integration at data level via links between related resources. Like OWL, OSLC is built upon and extends RDF; that is, OSLC resources are defined in terms of RDF properties.

The QUDT (Quantity, Unit, Dimension and Type) ontology defines the base classes properties, and restrictions used for modelling physical quantities, units of measure, and their dimensions in various measurement systems. Taking OWL as its foundation, the goal of the QUDT ontology is to provide a unified model of, measurable quantities, units for measuring different kinds of quantities, the numerical values of quantities in different units of measure and the data structures and data types used to store and manipulate these objects in software.

Data validation is another important concept in software engineering. For example, referring to the Client tier in Figure 1, data is typically entered by a user filling in a data entry form made up of multiple data entry fields. Before passing the inputted data to the lower tiers, each data entry field is validated against predetermined criteria. This validation process ensures that data is input in the proper format and within a reasonable range of expected values. To assure validation consistency among all applications using a database, the validation criteria may be defined by a set of data constraints. A constraint definition language may be defined to allow data constraints to be defined, but these are conventionally specific to a particular database technology and/or proprietary (for example, CDL by Oracle Corp).

It should be noted that data validation is not confined to the above example of data entered by a user. More generally, data constraints are a widely adopted mechanism in multi-tier architectures built on relational databases. They enable data validation with a declarative approach, thus reducing programming effort. Data constraints relieve developers of programming language dependent validation code at different levels:
- when applied at data level (e.g. inside database management systems), they avoid database-specific validation code;
- when used at Application Program Interface (API) level, they provide consistency checks for client input, hence replacing API-dependent input validation code.

For example, a SQL CHECK constraint is a type of integrity constraint in SQL which specifies a requirement that must be met by each row in a database table. The constraint must be a predicate, and can refer to a single or multiple columns of the table. Meanwhile, there are a number of activities in W3C relating to data constraints, including Shape Expressions which is a language for expressing constraints on RDF graphs, allowing programmers to validate RDF documents, communicate expected graph patterns for interfaces, generate user interface forms and interface code, and compile to SPARQL queries. Likewise, OSLC ResourceShapes allow the specification of a list of properties with allowed values and the association of that list with an RDFS Class.

On the other hand, a truly schema-less database allows data to be stored without reference to data types, making it difficult to provide data constraints.

To summarise some of the preceding discussion, W3C provides standards including RDFS and OWL to describe vocabularies and ontologies in RDF. These standards are primarily designed to support reconciliation of different vocabularies to facilitate integration of various data sets and reasoning engines which have the ability to infer new information from given information. OSLC Resource Shapes provide an RDF vocabulary that can be used for specifying and validating constraints on RDF graphs. Resource Shapes provide a way for servers to programmatically communicate with clients the types of resources they handle and to validate the content they receive from clients.

However, as already mentioned, multi-tier systems are progressively drifting away from pure relational back ends, in favour of polyglot data tiers. Current database-specific constraint enforcement mechanisms do not comply with data tiers where multiple data models co-exist, or which may include schema-less databases.

For example, consider a system which analyses a network of customers to keep track of their purchases, and generates reports for a number of product manufacturers. The system, implemented with a multi-tier architecture, includes a polyglot data tier that stores manufacturer profiles in a relational database, and a social network of customers in a triplestore. In addition, the system should integrate product catalogues of various manufacturers. Such data is stored in remote databases owned by manufacturers, and no *a priori* knowledge of the databases is given.

Enforcing data constraints in such scenario requires familiarity with multiple constraint definition languages: at data-level, tables in the relational database must specify attribute data types, perhaps including SQL CHECK constraints. Knowledge of OSLC ResourceShapes or W3C Shape Expressions is needed to constrain triplestore data. Remote data stores are managed by third-parties, and polyglot system architects do not have access rights to add constraints at database-level. Besides, such remote databases might be schema-less, and thus lacking validation mechanisms. Hence, supporting unknown third-party data stores requires validation code at application level, meaning additional development effort. In addition, such validation code must support extensions, as remote data stores might be based on new data models and APIs.

A store-agnostic mechanism for the definition and the enforcement of constraints in polyglot data tiers is therefore required.

### Summary of the Invention

According to a first aspect of the present invention, there is provided a method of enforcing data constraints in a polyglot data tier having a plurality of heterogeneous data stores, comprising steps of:
considering data in the data stores as records which serialise the data irrespective of how and where the data is stored;
extracting a record to be validated;
finding a record shape corresponding to the record, each record shape expressed in an extensible vocabulary and determining the structure of a record; and
applying data constraints to the record by checking the record against each of a plurality of criteria defined in the corresponding record shape; and
determining the record as valid if all the criteria are fulfilled.

Here, the heterogeneous data stores may be databases of different types, employing different technologies, data models and so forth.

Considering data as records can involve expressing the data, stored in a database-specific form, in a common form called a "record" such that the details of how and where the data is stored (or to be stored) are no longer important.

Extracting a record to be validated can include outputting an existing record from a data store, or deriving the record from a user request to create, read, update or delete certain data in or from a data store. Deriving a record from a request can involve parsing the request to identify the data being specified, and providing the result in the form of a record.

Finding a record shape can include referring to a depository of defined record shapes to find one which fits the record that has been derived. Validating the record against the record shape means to check the form of the record according to any of a number of criteria discussed later, to check that the record is complete and complies with the form expected.

Thus, a unified data model is provided based on the concept of "records", each record expressing data in accordance with a defined structure or "record shape" associated with it. The record shapes are expressed in an extensible vocabulary such as RDFS/OWL, and can be stored in a repository independent of the polyglot data tier, allowing new record shapes to be defined to deal with additional data stores with possibly unforeseen data models, data types etc. Data constraints are applied to a record extracted in some way (for example, extracted from an incoming request to manipulate specified data in the polyglot data tier such as POST, GET, PUT or DELETE) to validate the record by ensuring that it complies with the structure defined by the associated record shape.

Typically, the result of validating the record is to authorise a data operation with respect to the polyglot data tier. Thus, the method preferably further comprises, if the record is determined as valid, performing an operation on the record including one or more of: creating the record in a data store; reading the record from a data store; using the record to update a data store; and deleting a record from a data store.

The method may also include receiving a request including specified data and extracting the record to be validated on the basis of the specified data.

One possibility here is that the record referred to above is contained in the request, as would be the case for example if the request is to create a new record in a data store.

Alternatively, the record may be contained in one of the data stores and specified in the request. This would apply, for example in the case of a read operation requested by a remote client.

A further possibility is that the record is identified without any specific client request, for example in a process of checking or discovery of a database.

Preferably, the method further comprises representing each data store (that is, each database which may be one of a number of different kinds) as an abstract data source having a data source identifier, and the request contains information which allows the data source identifier corresponding to the specified data to be identified. In this way, a validated request can be easily routed to the appropriate data store.

Preferably each record is an n-element tuple of comma-separated values. The present invention can be applied to data stores of any type. For example one or more of the data stores may be a triplestore, in which case, in the records for the data in the triplestore, each comma-separated value corresponds to an object of an RDF predicate.

Alternatively or in addition, the data stores may include an RDBMS, and in the records for the data in the RDBMS each comma-separated value corresponds to an attribute stored in a table.

Other possible types of data store (non-exhaustive) to which the present invention may be applied include a document-oriented database such as MongoDB, a column-oriented table-based database such as Cassandra, and a key-value pair based database. Hybrid databases may also be present: for example Cassandra can be regarded as a hybrid column-oriented and key-value pair database.

New types of data store, including types not yet developed, can also be accommodated by the present invention. Thus, the method preferably further comprises, when a data store of a new type is added to the polyglot data tier, using the extensible vocabulary to define a new record shape defining the structure of data stored in the data store.

Each record shape preferably includes information on data types, cardinality, and field formatting of a record, and may be expressed as a set of Resource Description Framework, RDF, n-tuples (e.g. triples). The record shapes may employ an RDFS/OWL ontology in order to be data-model independent. This is also called a "store-agnostic" approach because the method does not care about the details of the data model used by each data store.

According to a second aspect of the present invention, there is provided a Data Constraint Engine for enforcing data constraints in a polyglot data tier having a plurality of heterogeneous data stores, comprising:
means for considering data in the data stores as records which serialise data in the data stores irrespective of how and where the data is stored;
means for extracting a said record;
means for accessing, on the basis of the extracted record, a record shape from a shapes catalogue, each record shape expressed in an extensible vocabulary and determining the structure of a record; and
a plurality of validators for validating the record by checking the record against a plurality of criteria defined in the corresponding record shape and determining the record as valid if all the criteria are fulfilled.

The Data Constraint Engine is preferably further equipped with an interface for client requests and a records dispatcher. Thus, in one embodiment there is provided a Data Constraint Engine for enforcing data constraints in a polyglot data tier having a plurality of heterogeneous data stores, comprising:
an interface for processing requests, each request specifying data, the interface arranged to extract from a request, a record corresponding to the data specified in the request, where records serialise data in the data stores irrespective of how and where the data is stored;
means for accessing, on the basis of the record extracted by the interface, a record shape from a shapes catalogue, each record shape expressed in an extensible vocabulary and determining the structure of a record;
a plurality of validators each for validating records against record shapes; and
a record dispatcher for routing the specified data to, or retrieving data from, the appropriate data store in the polyglot data tier after the record corresponding to the specified data has been validated by the validators.

Each of the heterogeneous data stores within the polyglot data tier is preferably represented as an abstract data source having a data source identifier, the request containing information indicative of the data source identifier corresponding to the specified data, and preferably the interface is arranged to extract the data source identifier from the request.

The plurality of validators may include individual validators for each of slot count; cardinality; data type; and format (where formats include HTML, XML or JSON for example). Slot count refers to the number of "slots" in the record (where a slot is a wrapper for one or more fields of the record). The other validators may be applied to each slot. For example the cardinality may refer to the number of elements which may exist in a slot, the data type may specify types of data permissible in each field of the slot, and the format may define the syntax of each filed in accordance with a particular language such as HTML, XML or JSON.

Each record shape is preferably a Resource Description Framework, RDF, triple (or n-tuple) expressed in an RDFS/OWL vocabulary. RDF triples identify things (i.e. objects, resources or instances) using Web identifiers such as URIs and describing those identified 'things' in terms of simple properties and property values. In terms of the triple, the subject may be a URI identifying a web resource describing an entity, the predicate may be a URI identifying a type of property (for example, colour), and the object may be a URI specifying the particular instance of that type of property that is attributed to the entity in question.

Features of the above Data Constraint Engine can be applied to any of the above methods, and vice-versa.

According to a third aspect of the present invention, there is provided a computing apparatus configured to function as the Data Constraint Engine mentioned above.

According to a fourth aspect of the present invention, there is provided a computer program which, when executed by a computing apparatus, causes the computing apparatus to function as the above mentioned computing apparatus.

Embodiments of the present invention address the following problems which arise when dealing with data constraints in polyglot data tiers:
A. Data architects and developers must deal with multiple constraint definition languages, making maintenance increasingly difficult.
B. Data stores adopting unforeseen data models might be added to the polyglot data tier, hence an extensible approach is required.
C. Polyglot data tiers often include remote, third-party data stores: such databases are not under direct control, hence polyglot data tier architects require an alternate constraint enforcement mechanism.

Proposals to date fail to address the above problems. More particularly:
A. none has a store-agnostic approach to declare and enforce constraints, thus preventing adoption in polyglot data tiers;
B. none has an extensible design that fits unforeseen data models;
C. most of them need direct control on data stores, thus not supporting third-party, remote databases.

Embodiments of the present invention provide a general-purpose approach to data validation in polyglot data tiers, rather than a replacement for database-specific and data model-bound constraints.

A store-agnostic engine is proposed for constraint enforcement in polyglot data tiers. Constraints are described with a declarative approach, thus no data store-specific constraint language is used. Moreover, the constraints are modelled on a lightweight RDFS/OWL ontology, thus extensions are natively supported. Constraints are stored in a standalone repository and enforced at runtime by a validation engine. Hence, polyglot data tier with third-party data stores are natively supported.

Thus, one embodiment of the present invention is a store-agnostic data constraint engine for polyglot data tiers. The Data Constraint Engine may employ data constraints (i.e., rules) expressed using RDFS/OWL to check data operations (requests) relating to data stored (or to be stored) in the polyglot data tier.

More particularly, an embodiment of the present invention can provide a Data Constraint Engine for enforcing data constraints in a polyglot data tier having a plurality of database-specific data stores of various types such as an RDBMS, Triplestore and MongoDB. The Data Constraint Engine uses the concept of a unified data model based on "records" in order to allow data constraints to be defined (using so-called "record shapes") in a store-agnostic way.

The Data Constraint Engine may be applied to user requests for example, by including APIs for processing incoming requests from remote clients to access data in the polyglot data tier. The APIs extract, from each request, a record corresponding to the data specified in the request and a data source identifier identifying the data store holding the specified data. Then, on the basis of the record extracted by the interface, an appropriate record shape is extracted from a shapes catalogue, the record shape determining the structure of the record. Validators each validate the record against the record shape according to various criteria such as format, data type, cardinality and slot count. In this example, if the record is validated, a record dispatcher directs the specified data to the appropriate data store using the data source identifier.

In the above and other embodiments, the technical problems identified above are solved as follows:
A. The present invention introduces the concept of "Record Shapes", which are data model-independent, declarative constraints based on an RDFS/OWL vocabulary. Unlike existing proposals, such ontology is designed to be data model-agnostic. By relying on Record Shapes and a unified data model based on Records, the Data Constraint Engine guarantees a store-agnostic approach and relieves developers of database-specific constraint languages, thus fitting polyglot data tier scenarios. Furthermore, since Record Shapes are regular RDF triples, developers do not need to learn new constraint definition languages.
B. Modelling Record Shapes with an RDFS/OWL vocabulary guarantees extensibility for database-specific constraints, hence enabling support for a wide range of data stores and unforeseen data models. In other words, existing Shapes can readily be modified, and new Shapes added. Extensibility is also guaranteed by modular and extensible data validators.
C. Record Shapes do not need to be stored inside each data store in the polyglot tier. Instead, they are stored in a standalone repository under direct control of polyglot tier architects (the Shape Catalogue), thus enabling support for third-party data stores.

### Brief Description of the Drawings

Figure 1 is a schematic diagram of a multi-tier architecture;
Figure 2 shows an example of an RDF graph;
Figures 3A and 3B illustrate conversions between Data Sources and Records, Figure 3A showing conversion from a triplestore to Records, and Figure 3B conversions from a relational table to Records;
Figure 4 illustrates a Record Shape Vocabulary employed in an embodiment of the present invention;
Figures 5A and 5B show sample Record Shapes defined using the Record Shape Vocabulary of Fig. 4, Figure 5A representing a Record Shape for an RDF Graph and Figure 5B a Record Shape for a Relational DB Table;
Figure 6 illustrates an architecture of a Data Constraint Engine provided in an embodiment of the present invention;
Figure 7 is a flowchart of a constraint enforcement algorithm employed in an embodiment of the present invention;
Figure 8 illustrates addition of a data validator to the Data Constraint Engine; and
Figure 9 illustrates a computer system suitable for implementing the Data Constraint Engine of the present invention.

### Detailed Description

An embodiment of the present invention will now be described by way of example, referring to the Figures.

This section describes i) the validation constraints model and their creation, ii) the validation engine architecture, and iii) the validation constraint enforcement mechanism. Before describing how constraints are built, the data model used by the constraint enforcement engine will be introduced.

Embodiments of the present invention adopt a "store-agnostic" model based on the concept of a Record (Definition 1):
Definition 1: (Record). A Record consists of an n-element tuple of comma-separated values, as shown below:
   value1, value2, value3, ..., valueN

The constraint enforcement engine considers data as Records, regardless of how and where such information is stored in the data tier (e.g. as relational tables in RDBMS, as graphs in triplestores, as documents in MongoDB, etc).

To guarantee a storage-independent approach, Records are logically organised into Data Sources (Definition 2):
Definition 2: (Data Source). A Data Source is an abstract representation of database-specific containers (e.g. relational tables, RDF graphs, MongoDB documents, etc.).

In the companies-products-customers example mentioned earlier, suppose that customers are stored in the graph http://customers in a triplestore, and company profiles in the relational table companies are included in the RDBMS (Figure 1). Tuples in the RDF graph and in the table are serialised by the constraint enforcement engine into Records:

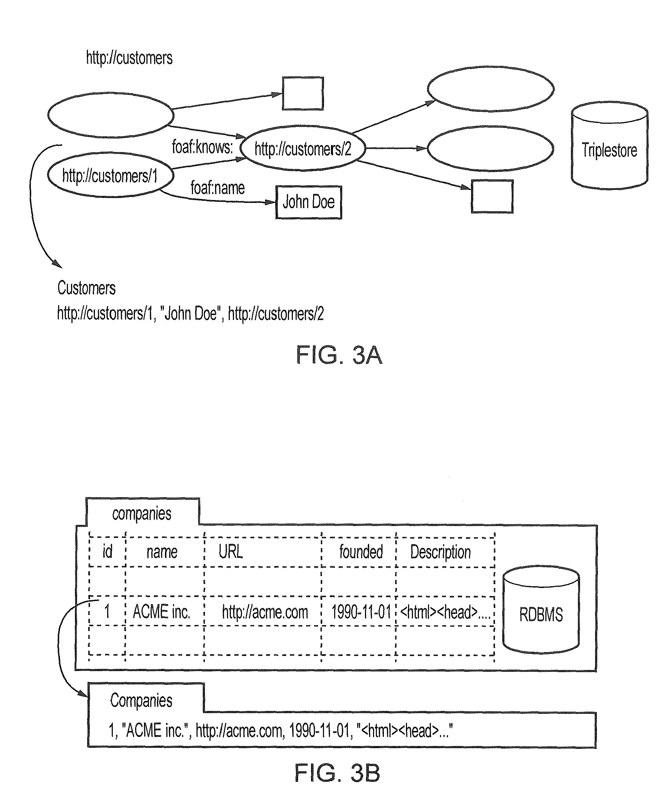

In Figure 3A, Records are associated with a Data Source named Customers, an abstract representation of the RDF graph http://customers. Each comma-separated value in the example record corresponds to the object of an RDF predicate (e.g. John Doe is the object of the predicate foaf:name).
In Figure 3B, each comma-separated value in the Record corresponds to an attribute stored in the relational table. Records are associated with a Data Source named Companies. The Data Source is the abstract representation of the relational table companies.

Each Data Source is associated with a Record Shape, an entity that models data constraints (Definition 3):
Definition 3: (Record Shape). A Record Shape is a set of data constraints that determine how each Record must be structured. Constraints included in Record Shapes are associated with record fields and include information on:
   - data types
   - cardinality (i.e., the number of elements present)
   - field formatting

Record Shapes are created manually by data architects or back-end developers in charge of the polyglot data tier.

Record Shapes adhere to a declarative approach. They are expressed in RDF and are modelled on the Record Shape Vocabulary, a lightweight RDFS/OWL ontology. Although the present invention adopts the Linked Data philosophy of reusing and extending classes and properties of existing ontologies (e.g. OSLC, QUDT), a vocabulary is used that, unlike existing works, models constraints in a data-model agnostic fashion: this choice guarantees support for polyglot data stores.

In addition, such ontology-based approach guarantees extensible data constraints, since RDFS/OWL vocabularies can be expanded by design. Hence, straightforward model additions will support data stores with unforeseen data models, data types, data formatting, or units of measurement, all without compromising backward compatibility.

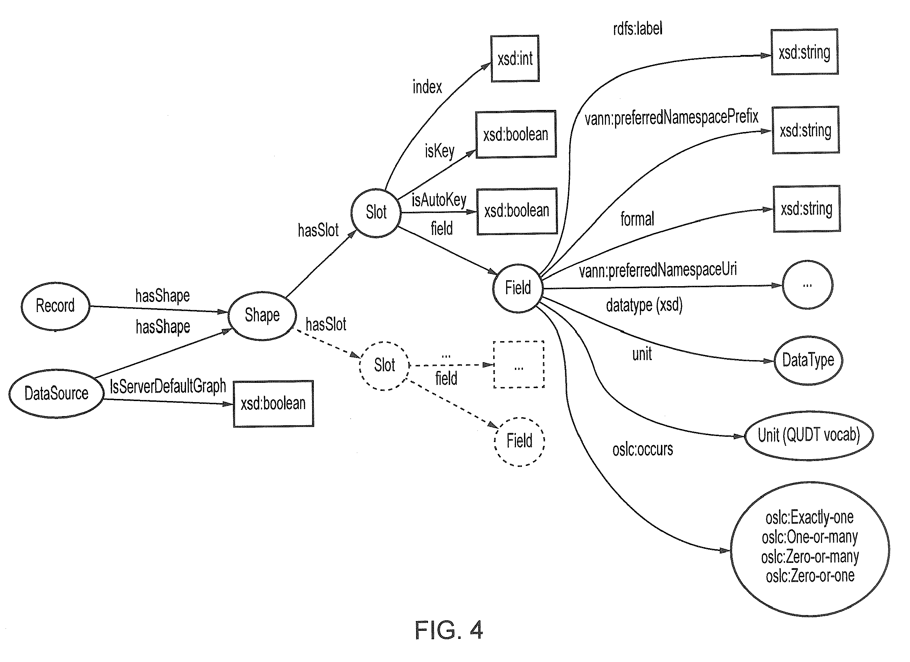

Figure 4 shows the main classes and properties of the vocabulary. What follows is a detailed descriptions of the vocabulary elements:
Classes
   - Record. Represents an atomic, meaningful unit of data.
   - DataSource. An abstract source of Record entities. It consists of a table for RDBMS, an RDF named graph for triplestores, a CSV file, a MongoDB document, a Cassandra table, etc.
   - Shape. The Record Shape describing a DataSource or a Record. It consists of a container of slots.
   - slot. A Slot consists of a Wrapper of one or more Fields.
   - Field. A Field describes the structure of a Record comma-separated element.
   - qudt:Unit. The class is imported from the QUDT vocabulary, and it used to express unit of measures (e.g. meters).
Properties
   - hasShape. Associates a Shape to a Record or a DataSource.
   - Field. Associates a Slot with a Field.
   - hasSlot. Associates a Slot to a Shape.
   - index. Determines the global unique index of the slot in the Record.
   - isKey. Determines if the slot is the unique identifier of the Record.
   - isAutoKey. Determines if the Record has an "implicit" key. The property is used for RDF instances. RDF instances are uniquely identified by their URIs, but such piece of information does not appear as an explicit RDF property. Hence, the need for a property that models such feature.
   - isServerDefaultGraph. States if a DataSource corresponds to a triplestore default graph.
   - datatype. Indicates the xsd Datatype of a Field.
   - format. Indicates formatting information for a Field (e.g. JSON (JavaScript Object Notation), XML, HTML, etc.). This property enables syntax check for Fields consisting in CLOBs (Character Large Objects - a data type used by various database management systems), for example to verify that XML and HTML content is well-formed, check JSON syntax validation, etc.. Note that the list of supported formats is extensible to other character large objects, and to binary objects (e.g. PDF, images, etc.).
   - unit. Indicates the unit of measurement of the slot, according to QUDT vocabulary.
   - vann:preferredNamespacePrefix. The property belongs to the VANN vocabulary (VANN is a vocabulary devised to allow annotation of other vocabularies).
In the Record Shape Vocabulary, it indicates the namespace prefix used in Fields (in case such records corresponds to RDF triples).
   - vann:preferredNamespaceUri. The property belongs to the VANN vocabulary. In the Record Shape Vocabulary it indicates the URI used in Record Fields (in case such records corresponds to RDF triples).
   - oslc:occurs. The property originally appears in the OSLC vocabulary. It specifies the cardinality of a Field, by referring to the following instances:
   - oslc:Exactly-one
   - oslc:One-or-many
   - oslc:Zero-or-many
   - oslc:Zero-or-one

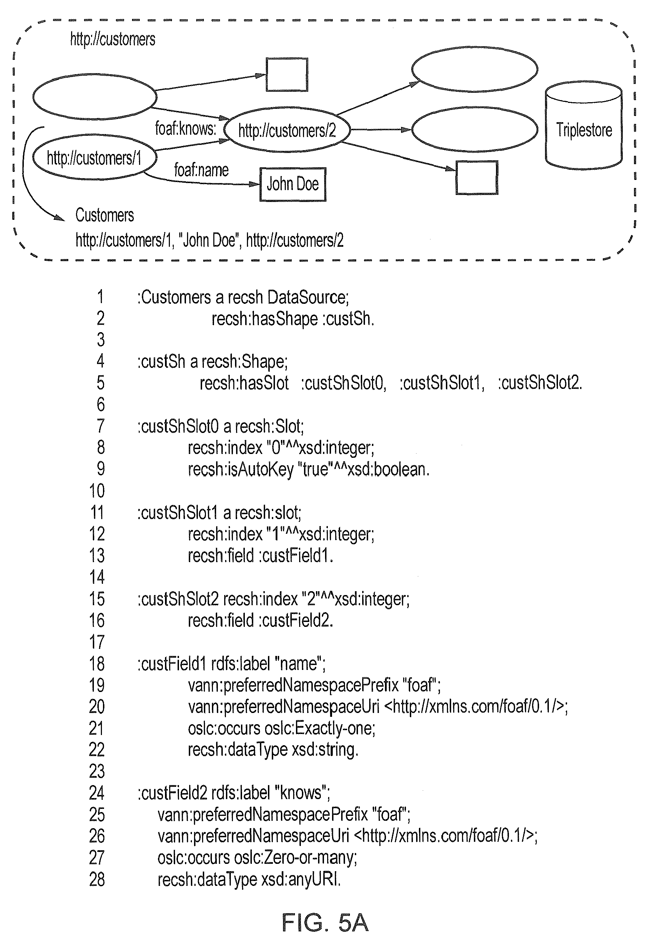

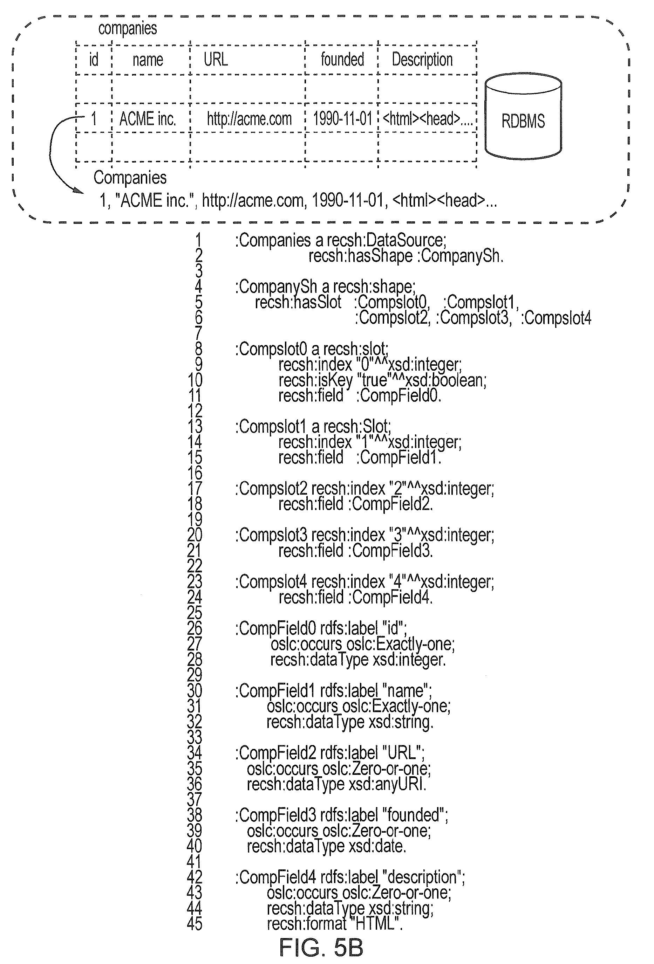

Figures 5A and 5B show two sample Record Shapes. Figure 5A is the Shape for an RDF graph, and Figure 5B the Shape for a Relational DB table (prefixes omitted) for the companies-products-customers example. The two Record Shapes each are defined with the Record Shape Vocabulary of Fig. 4 (the vocabulary is denoted by the recsh prefix).

In Figure 5A the Shape models the structure and the constraints of the RDF graph describing a customer. The Data Source Customers is associated with the CustSh Shape (line 2). The Shape has three slots: the first slot (lines 7-9) is an "implicit" key (line 9), hence it does not contain a field. The value of the field is automatically generated with the URI of the instance, that acts as unique identifier for RDF resources (in the example such value is http://customers/1). The second slot (lines 11-13) contains the field describing the name of the customer (lines 18-22): the field specifies the prefix and the namespace of the vocabulary that models the RDF property of the name of a customer (lines 19-20). The cardinality is defined in line 21, and the data type in line 22. The third slot (lines 11-14) models the acquaintances of each customer (lines 24-28). Since customers might know multiple people, the cardinality is zero or many (line 27). Customers must be defined as URIs (line 28).

In Figure 5B the Shape models the content of the company relational table. The Data Source Companies is associated with the Record Shape CompanySh (lines 1-4). The Shape contains five slots (lines 5-6): The first slot (lines 8-11) identifies the unique identifier of each tuple (line 10). The unique identifier format is defined by the field in lines 26-28. The second slot and its field model the name of the company (lines 13-15 and 30-32). The third slot and its field model the URL of the company (lines 17-18 and 34-36). The fourth slot-field couple models the foundation year (lines 20-21 and 38-40). Note that in this case the field type is xsd:date. The last slot-field couple models the HTML description of the company (lines 23-24 and 42-45). Note that the data type of this Field is a string (line 44) and such string must comply with HTML syntax (line 45).

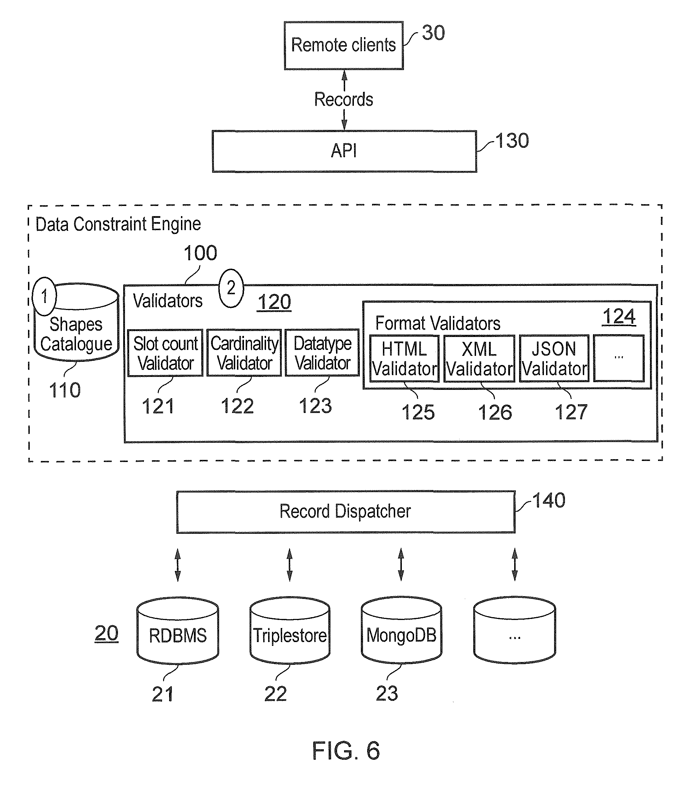

Figure 6 is a system overview from a software perspective. The system will be described by referring to a request from a remote client by way of example, but it is to be understood that the present invention is not confined to validating the contents of such a request. Embodiments of the present invention can be applied to validation of data read from a data store, to inspecting data within a data store, and to discovery of data regardless of any client request.

The Data Constraint Engine 100 includes two main components: the Record Shapes Catalogue 110, and the Validators 120.

Shapes Catalogue 110. This is the Record Shapes repository, implemented as a triplestore. Shapes are manually created by data architects and stored in this component. Thanks to the Catalogue 110, Shapes do not need to be stored inside each data store in the polyglot tier, thus enabling support to third-party data stores. Although shown as part of the Data Constraint Engine 100, the Shapes Catalogue 110 could of course be stored remotely so long as it is accessible to the Data Constraint Engine.

Validators 120. The modules in charge of validating Records against Shapes. They include:
- Slot count Validator 121, which checks the number of Record Slot against a Shape.
- Cardinality validator 122, which checks the cardinality of each Record Field against Shape cardinality constraints.
- Data type validator 123, which checks if Record Field data types match against Shape data types.
- Format validators 124. This group of validators check Record Field syntax, according to what is specified by the format property in the Record Shape.

The above Validators may be defined in a Validator List which can be stored along with the Shapes Catalogue 110. The Data Constraint Engine is provided with built-in syntax validation for HTML (validator 125), XML (validator 126) and JSON (validator 127), for example. Note that the list of supported formats is extensible in the Record Shape ontology, hence new format validators can be added by third parties.

The aforementioned components of Data Constraint Engine 100 work in conjunction with two external modules, an API 130 and a Record Dispatcher 140.

API (or more accurately, set of APIs) 130 is the frontend in charge of processing incoming data operations requested by remote clients 30, and building responses. "Data operations" here includes the generic persistence storage functions such as create, read, update and delete. For example, HTTP-based APIs map such generic operations to POST (create), GET (read), PUT (update), and DELETE (delete). Such data operations are typically generated by an application executed by a remote client, either autonomously or in response to user input.

Record Dispatcher 140 routes Records to, and retieves Records from, the correct data store in the polyglot data tier 20. In Figure 6, this data tier is illustrated as including a RDBMS 21, a triplestore 22, a MongoDB database 23 by way of example. As indicated by the dots, further databases of various kinds may also be included in the polyglot data tier 20.

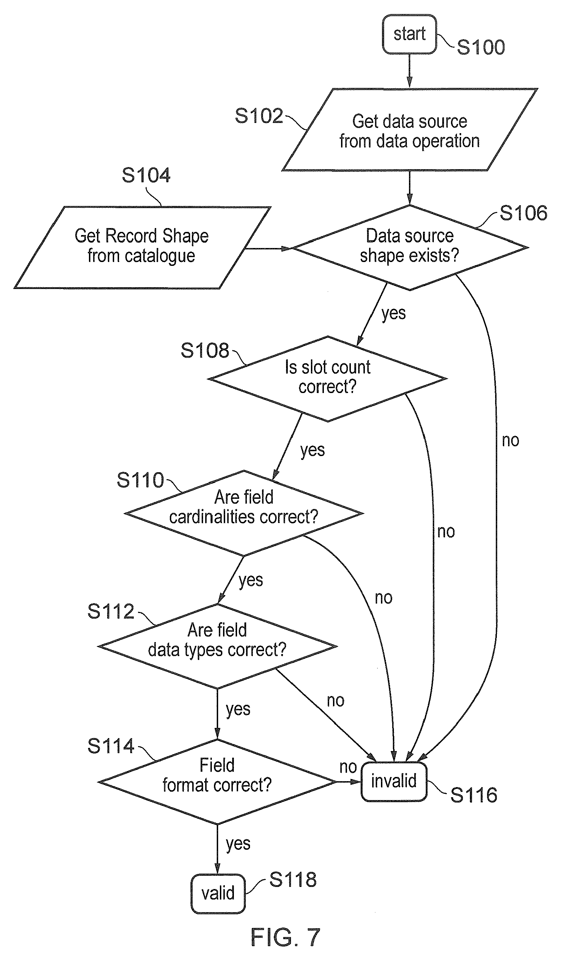

Figure 7 is a flowchart of a constraints enforcement process carried out by the Data Constraint Engine 100 of Figure 6.

It is assumed that a remote client 30 generates data operations (access requests) with respect to data in the polyglot data tier, for example by running an application which requires access to the polyglot data tier for obtaining operands, writing results and so on. Each such data operation on the polyglot data tier triggers a constraint evaluation. Incoming (or out-coming) Records are validated against Shapes stored in the catalogue 110: invalid Records trigger a validation error. Valid Records are sent to (or retrieved from) the requested data store.

When applied to the example of an incoming data operation from a remote client, the constraint enforcement process performed by the Data Constraint Engine 100 works as follows.

The process starts at step S100. In a step S102, the APIs 130 parse the data operation and extract the Record and the Data Source identifier. Meanwhile in step S104 the engine 100 queries the Catalogue 110 and fetches the Record Shape associated with the Data Source Identifier extracted at the previous step.

In step S106 it is checked whether or not the Record Shape exists. If a Shape is not found (S106, "no"), the validation procedure cannot proceed and the Record is marked as invalid (S116).

Assuming the Shape is found (S106, "yes"), a check is made in S108 to match the slot count of the Record against the number of Slots of the Shape. In case of mismatch (S108, "no"), the Record is invalid (S116). Otherwise, (S108, "yes"), in S110 the engine checks the cardinalities of each Record Field against the cardinalities specified in the Shape. If a mismatch is detected (S110, "no"), the Record is invalid (S116).

Next, in S112, the Data Constraint Engine 100 verifies that each Record Field has matching data types with those included in the Shape. If a mismatch is detected (S112, "no") the Record is invalid (S116). Otherwise the process proceeds to S114 to check the syntax of each field, according to the format property (if such property is present in the Record Shape). A specific Format Validator is executed (HTML, XML, JSON, or third-party extension syntax check for additional data formats). If the syntax validation does not succeed (S114, "no"), the Record is invalid (S116). Otherwise the Record is valid (S118) and can be dispatched to (or the corresponding data retrieved from) the requested data store.

For example, suppose that five Records are sent to the polyglot data tier with a "Create" operation (e.g. HTTP POST), and they are validated by the data constraint engine 100. Each operation also contains the name of the Data Source associated with the Record:
i) http://customers/1, "John Doe", http://customers/2 (the record belongs to the Data Source Customers)
ii) http://customers/1, http://customers/2 (the record belongs to the Data Source Customers)
iii) http://customers/1, http://customers/2 (the record belongs to the Data Source Customers)
iv) 2, "ACME inc.", http://acme.com, 2006, "<html><head>..." (the record belongs to the Data Source Companies)
v) 2, "ACME inc.", http://acme.com, 1990-11-01, "<html<head>..." (the record belongs to the Data Source Companies)
   Record (i) belongs to the Customers Data Source. The engine queries the Catalogue to retrieve a Record Shape associated with such Data Source. The Record Shape exists (CustSh, see Figure 5A) and it is then used to validate the Record. First, the slot count is checked. Record (i) contains three comma-separated slots, like Record Shape CustSh. The cardinalities of each field are verified. Since they are all correct, the engine proceeds with data type validations: Record i) begins with a URI: this is the correct data type for an implicit key (Figure 5A, line 9). Slot 2 contains a valid value (a string), and the last slot contains a URI field, that matches with the Shape. Record (i) is therefore valid.
   Record (ii) belongs to the Customers Data Source. The engine queries the Catalogue to retrieve a Record Shape associated with such Data Source. The Record Shape exists (CustSh, see Figure 5A) and it is then used to validate the Record. First, the slot count is checked. Record (ii) contains two comma-separated slots, instead of the three slots required by the Record Shape CustSh. Record (ii) is therefore not valid.
   Record (iii) belongs to the Customers Data Source. The engine queries the Catalogue to retrieve a Record Shape associated with such Data Source. The Record Shape exists (CustSh, see Figure 5A) and it is then used to validate the Record. First, the slot count is checked. Record (iii) contains three comma-separated slots, like Record Shape CustSh. The cardinalities of each field are verified. The second field is empty, despite its Record Shape stipulates that there must be exactly one element (Figure 5A, line 21) Record (iii) is therefore not valid.
   Record (iv) belongs to the Companies Data Source. The catalogue is queried for the Shape associated with the Data Source: one Shape is found (CompanySh, Figure 5B). After slot count check, field cardinalities are verified. They are correct, so the engine proceeds in checking data types. One error is detected in the third field ("2006"): such value does not comply with the YYYY-MM-DD format of xsd:date. Record (iv) is therefore not valid.
   Record (v) belongs to the Companies Data Source. The catalogue is queried for the Shape associated with the Data Source: one Shape is found (CompanySh, Figure 5B). After slot count check, field cardinalities are verified. They are correct, so the engine proceeds in checking data types, that are all correct. The CompanySh Shape states that the last field must contain valid HTML content. Syntax validation is performed on the "<html<head>..." string, and since <html tag is not closed, the syntax is not correct. Record (v) is therefore not valid.

In the case of a POST operation, records found to be valid are then forwarded to the polyglot data tier for storage. If a record is found to be invalid, an error message is returned to the remote client 30 from which the request originated.

Other kinds of access request can be handled in a similar manner, with data specified by a GET instruction for example being validated before the instruction is passed to the polyglot data tier.

Moreover, use of the Data Constraint Engine is not confined to validating incoming data operations which specify data to be added to or retrieved from the polyglot data tier. It can equally be applied to validating data already stored in the polyglot data tier.

As one example, the Data Constraint Engine can be used to validate a record read out from the polyglot data tier for any reason (such as in response to a GET request).

Asa another example, the Data Constraint Engine could be systematically applied to a specific data store (or to a part thereof the integrity of which is in doubt) to check whether each Record complies with the Record Shape defined for that data store. In this instance, the API 130 and remote client 30 need not be involved in the process, other than to initiate the check and report back the results to the remote client.

Another instance in which the Data Constraint Engine could be used is for discovering contents of a data store or transferring data from one data store to another.

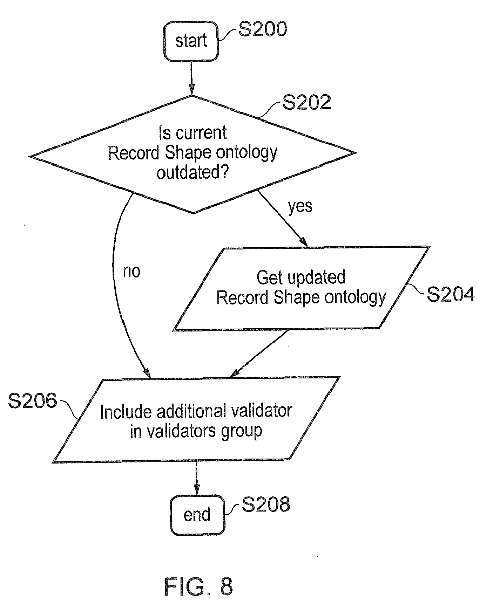

Figure 8 illustrates a process of adding extensions to the Data Validator List (and/or Shapes Catalogue 110).

The validator list of the Data Constraint Engine 100 (Figure 6) is extensible by third parties, thus supporting data stores based on unforeseen data models, and additional data formats (e.g. binary objects such as PDF, images, etc.). Note that there are no restrictions on the data formats supported, as long as the following steps are performed The process of adding a new data validator is summarized in Figure 8 as follows.

The process starts at S200. In step S202 the Data Constraint Engine checks if the current version of the Record Shape Ontology is updated. Extending the validator list might need ontology editing (e.g. by adding additional properties), hence the Data Constraint Engine must refer to the most updated version. Note that the Record Shape Ontology is stored in the Catalogue, along with the Record Shapes. If the Record Shape Ontology is outdated (S202, "yes"), the Engine queries the Catalogue to retrieve the most updated version in S204. In step S206, once the ontology has been updated (if needed), the Engine updates the validator list, by adding any additional validator (e.g., new Record Shape). The process ends at S208. Note that the procedure described in Figure 8 is executed at bootstrap time, or it can be triggered manually by system administrators. Hence, validators can be plugged in the Data Constraint Engine at any time.

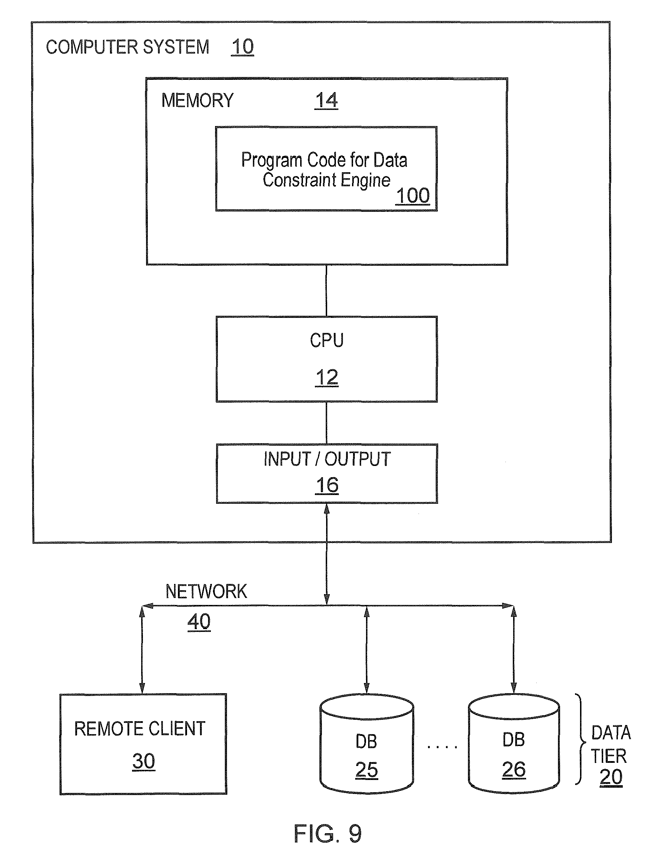

Figure 9 schematically shows a computer system 10 suitable for implementing the present invention or parts thereof. It includes a memory 14 for storing various programs and data, including the program code for the Data Constraint Engine 100 shown in Figure 6. The memory is connected to a CPU 12 for executing programs held in the memory (as will be understood by those skilled in the art, the CPU may in fact be many separate CPUs or cores). An input/output section 16 performs communications over a network 40 (such as the Internet) with entities outside the computer system 10, in particular remote clients 30 and the polyglot data tier 20 exemplified by two databases 25 and 26.

To summarise, an embodiment of the present invention can provide a store-agnostic engine for constraint enforcement in polyglot data tiers. Constraints are described with a declarative approach, thus no data store-specific constraint language is used. In addition, they are modelled on a lightweight RDFS/OWL ontology, thus extensions are natively supported. Constraints are stored in a standalone repository and enforced at runtime by a validation engine. Hence, polyglot data tiers with third-party data stores are natively supported.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

### Industrial Applicability

By relying on Record Shapes and a unified data model based on Records, the present invention enables a store-agnostic approach to enforcing data constraints, and relieves developers of database-specific constraint languages, thus fitting polyglot data tier scenarios. Furthermore, since Record Shapes are regular RDF triples, developers do not need to learn new constraint definition languages. Use of an RDFS/OWL-based ontology makes it easy to add new Record Shapes to deal with unforeseen data models and types, reducing or eliminating the need for validation code at application level. The present invention thus contributes to reducing programming effort.

## Claims

1. A method of enforcing data constraints in a polyglot data tier having a plurality of heterogeneous data stores, comprising steps of:
considering data in the data stores as records which serialise the data irrespective of how and where the data is stored;
extracting a record to be validated;
finding a record shape corresponding to the record, each record shape expressed in an extensible vocabulary and determining the structure of a record; and
applying data constraints to the record by checking the record against each of a plurality of criteria defined in the corresponding record shape; and
determining the record as valid if all the criteria are fulfilled.

2. The method according to claim 1 further comprising, if the record is determined as valid, performing an operation on the record including one or more of: creating the record in a said data store; reading the record from a data store; using the record to update a data store; and deleting a record from a data store.

3. The method according to claim 1 or 2 further comprising receiving a request including specified data and extracting the record to be validated on the basis of the specified data.

4. The method according to claim 3 wherein:
the record is contained in the request; or
the record is contained in one of the data stores and specified in the request.

5. The method according to claim 3 or 4 further comprising representing each data store as an abstract data source having a data source identifier, the request containing information which allows the data source identifier corresponding to the specified data to be identified.

6. The method according to any preceding claim wherein each record is an n-element tuple of comma-separated values.

7. The method according to claim 3 wherein the data stores include any of:
(i) a triplestore, wherein in the records for the data in the triplestore each comma-separated value corresponds to an object of an RDF predicate;
(ii) an RDBMS, wherein in the records for the data in the RDBMS each comma-separated value represents an attribute stored in a table;
(iii) a document-oriented database such as MongoDB;
(iv) a column-oriented table-based database such as Cassandra; or
(v) a key-value pair based database.

8. The method according to any preceding claim further comprising, when a data store of a new type is added to the polyglot data tier, using the extensible vocabulary to define a new record shape defining the structure of data stored in the data store.

9. The method according to any preceding claim wherein each record shape includes information on data types, cardinality, and field formatting of a record.

10. The method according to any preceding claim wherein each record shape is a set of Resource Description Framework, RDF, n-tuples and preferably the extensible vocabulary is based on RDFS/OWL.

11. A Data Constraint Engine for enforcing data constraints in a polyglot data tier having a plurality of heterogeneous data stores, comprising:
means for considering data in the data stores as records which serialise data in the data stores irrespective of how and where the data is stored;
means for extracting a said record;
means for accessing, on the basis of the extracted record, a record shape from a shapes catalogue, each record shape expressed in an extensible vocabulary and determining the structure of a record; and
a plurality of validators for validating the record by checking the record against a plurality of criteria defined in the corresponding record shape and determining the record as valid if all the criteria are fulfilled.

12. The Data Constraint Engine according to claim 11 further comprising an interface for receiving incoming requests, each request specifying data, the means for extracting arranged to extract the record on the basis of the data specified in the request.

13. The Data Constraint Engine according to claim 11 or 12 further comprising a record dispatcher for, if the record is determined as valid, performing an operation on the record including one or more of: creating the record in a said data store; reading the record from a data store; using the record to update a data store; and deleting a record from a data store.

14. The Data Constraint Engine according to claim 11, 12 or 13 wherein the plurality of validators include individual validators for each of:
slot count
cardinality
data type; and
format such as any one or more of HTML, XML and JSON.

15. The Data Constraint Engine according to any of claims 11 to 14 wherein each record shape is a Resource Description Framework, RDF, triple expressed in an RDFS/OWL vocabulary.

16. A computing apparatus configured to function as the Data Constraint Engine according to any of claims 11 to 15.

17. A computer program which, when executed by a computing apparatus, causes the computing apparatus to function as the computing apparatus defined in claim 16.
